# EUROPEAN PATENT APPLICATION

(11) **EP 1 992 521 A1**
(43) Date of publication of application: **19.11.2008**
(21) Application number: 08251747.5
(22) Date of filing: 19.05.2008
(51) Int. Cl.: B60P 1/00, B65F 9/00

(54) **Material transfer apparatus and method of material transfer**

(30) Priority: 18.05.2007 GB 0709540
(71) Applicant: Trent (MF) Limited, Unit 85A, Gibbons Industrial Park, Dudley Road Ki West Midlands DY6 8XF (GB)
(72) Inventor: Bayley, John, Worcesterhire DY12 2TQ (GB)
(74) Representative: Johnson, Carrie-Anne Louise

(57) **Abstract**

A material transfer apparatus for use in a material carrier (2) comprises a first displaceable element (20) adapted to be moved between a first position and a second position. A second displaceable element (60) is provided, adapted to be moved between a first position and a second position. The second displaceable element is releasably coupled to the first displaceable element. A second displacement means (70) is provided to move the second displaceable element from the first position to the second position, the first displaceable element being releasably coupled to the second displaceable element. Means (66) are provided for decoupling the first displaceable element from the second displaceable element. A first displacement means (40) moves the decoupled first displaceable element from the second position to the first position. The second displacement means (70) moves the second displaceable element from the second position to the first position.

## Description

The present invention relates to a scrap transfer apparatus, a scrap carrier incorporating such a scrap transfer apparatus and a method of scrap transfer. In particular, but not exclusively, the present invention has application in the transfer of scrap metal and the like. However, the present invention may have utility in the transfer of other materials.

It is known to transfer materials such as scrap metal from a first location to a second location, for example from a scrap yard to a second location where the scrap may be reclaimed.

At present there are two principal methods of arranging this. In each case, the scrap is loaded in a transport container of the kind to be described. Such containers comprise a rear wall at a first closed end connected to a second open end by upper, lower and respective side walls of the container. Typically, a securable door or doors are provided at the open end of the container to permit access to the container and to securely seal the container when required. Such containers may be transported on trailers or be loaded onto container vessels for shipping.

In a first method scrap is collected in the scoop or bucket of a teleporter from a scrap heap and the scrap loaded into a container at the open end of the container. The bucket of the teleporter is then manipulated to push the scrap into the container. There are several disadvantages to this method. Firstly, the manipulation of the bucket in this way is highly skilled job. The manipulation of the bucket can and does lead to damage to the container. While some damage can be suffered by the container, such damage inevitably shortens the useful working life of the container. Further the pushing of the scrap into the container by the scoop is an inefficient means of filling the container leading to uneven densities of scrap within the container. The pushing of the scrap may also lead the scrap to damage the container. Again, while some damage can be tolerated by the container, such damage inevitably shortens the useful life of the container.

An alternative method of filling a container involves suspension of the container with the open end angled upwards while a teleporter or similar device is used to fill the container by dropping scrap into the container. Dropping of scrap material can and will damage the container with the consequences already noted. In addition, great care needs to be taken around a scrap yard when this method of filling is being used to avoid injury to individuals due to falling scrap.

It is an advantage of the present invention that it allows for the filling of a container without damage being caused to the transport container.

According to a first aspect, a material transfer apparatus for use in a material carrier comprises a first displaceable element adapted to be moved between a first position and a second position,
a second displaceable element adapted to be moved between a first position and a second position and releasably coupled to the first displaceable element, a first displacement means to move the first displaceable element from the first position to the second position, the second displaceable element being releasably coupled to the first displaceable element,
means to decouple the first displaceable element and the second displaceable element
a second displacement means to move the decoupled first displaceable element from the second position to the first position, and
a third displacement means to move the second displaceable element from the second position to the first position.

Preferably the second displaceable element is adapted when decoupled from the first displaceable element to move within the first displaceable element. More preferably, the first displaceable element comprises a base and first and second side walls, the second displaceable element being adapted to move when decoupled within an area defined between the base and first and second side walls of the first displaceable element.

Preferably the first displaceable element is supported by rollers.

Preferably rollers are located to the sides of the first displaceable element.

Preferably the first displacement means comprises one or more winch mechanisms.

Preferably the second displacement means comprises a pneumatic or hydraulic piston.

Preferably the third displacement means acts with the first displacement means to move the first displaceable means from the second position to the first position.

Preferably the first displaceable means is provided with a forwardly directed lip on the base.

Preferably the second displaceable element is provided at an angle.

Preferably the material for transfer is scrap.

According to a second aspect of the present invention a material carrier incorporating a material transfer apparatus according to the first aspect of the invention, is further provided with a load bed on which the material transfer apparatus is located and a door adapted to be raised vertically, the rear surface of the door being provided at an angle.

Preferably the first displaceable element is adapted to extend beyond the load bed of the material carrier.

According to a third aspect of the invention a method of material transfer comprises the steps of providing a material transfer apparatus according to the first aspect of the invention, loading material onto the first displaceable element, moving the first displaceable element from the first to the second position, the second displaceable element being releasably coupled to the first displaceable element, decoupling the first displaceable element and the second displaceable element, moving the decoupled first displaceable element from the second position to the first position and then moving the second displaceable element from the second position to the first position. According to a further aspect of the invention a method of material transfer comprises the steps of providing a material carrier according to the second aspect of the present invention and a transport container carrier provided with a transport container, loading material onto the first displaceable element, aligning the material carrier with the transport container carrier, opening the door, moving the first displaceable element from the first to the second position, the second displaceable element being releasably coupled to the first displaceable element, decoupling the first displaceable element and the second displaceable element, moving the first displaceable element from the second position to the first position and moving the second displaceable element from the second position to the first position.

Preferably, the method comprises the further step of closing the door.

The invention will now be described, by way of example only, in which:-
Figure 1 shows a rear end sectional view of a scrap transfer apparatus mounted on a scrap carrier for use in accordance with the present invention;
Figure 2 shows a schematic side view of an apparatus for use on the present invention and a transport container mounted on a trailer, the apparatus and transport container being shown in a first position;
Figure 3 shows a schematic side view similar to Figure 2, with the apparatus and transport container shown in a second position;
Figure 4 shows a schematic side view similar to Figure 3 with the apparatus in a second position;
Figure 5 shows a schematic side view similar to Figure 4 with the apparatus in a third position; and
Figure 6 shows a schematic side view similar to Figure 2 following transfer.

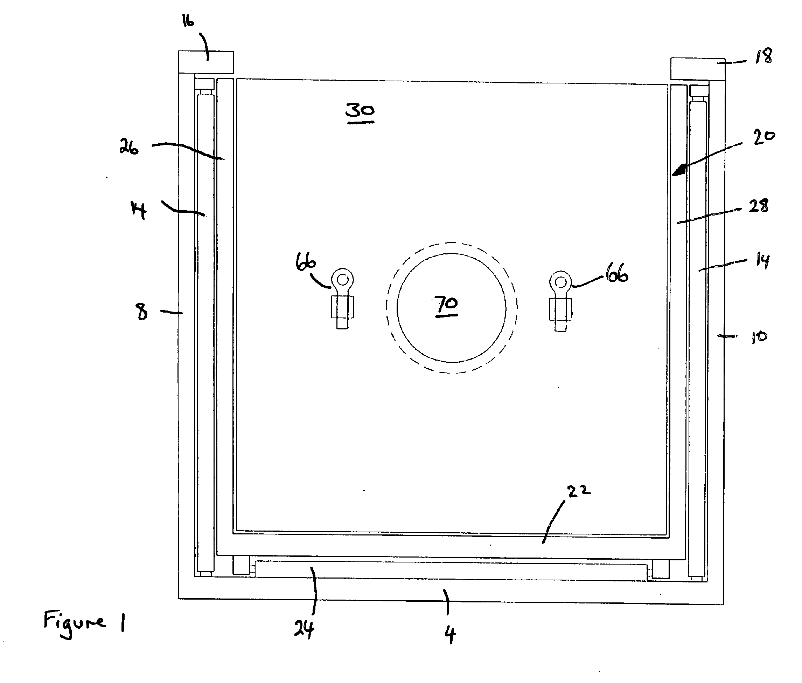

Referring first to Figure 1 a rear end sectional view of scrap transfer apparatus located on a scrap carrier for use according to the present invention is shown. The scrap transfer apparatus typically forms a part of and is mounted on a trailer of the kind used for collection of scrap materials, the trailer being drawn by a vehicle. Alternatively, the scrap transfer apparatus may be incorporated directly into a vehicle. Either a vehicle or a trailer is hereafter referred to as a scrap carrier 2.

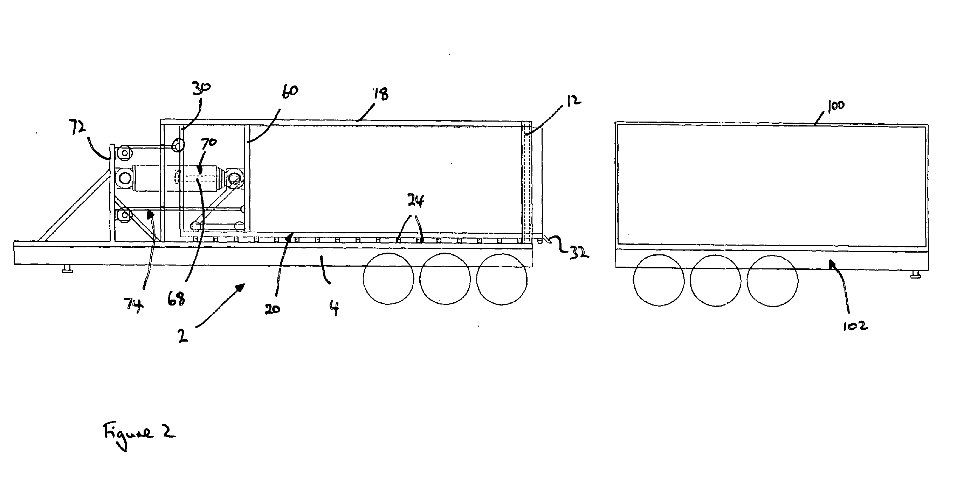

With reference to Figures 1 and 2, a scrap carrier 2 is provided with a shell comprising at a first end, a first rear upright wall 6 with first and second side walls 8,10 extending therefrom. Typically the side walls 8,10 are formed as walls upstanding from a load bed 4 of the scrap carrier. At a second end a releasable door 12 is provided to provide access to a storage volume defined by the first upright wall 6, the side walls 8,10 and the plane of the door 12 when in a closed position. Typically the door is closed and scrap material loaded into the load space by dropping of the waste into the storage volume from above. The door 12 is opened by displacing it, by any suitable means, substantially vertically in channels (not shown) provided in the side walls. Preferably the door is provided with an angled surface, angled such that an upper edge of the door surface is located rearwardly (to the left in Figure 2) of a lower edge of the door surface. This may be achieved by angling of the door or by providing an angled surface on an otherwise vertically disposed door.

A first displaceable element 20 in the form of a carriage of generally U-shaped profile is provided in the storage volume. The carriage comprises a base 22 supported on a plurality of rollers 24 or the like and first and second upstanding side walls 26,28. Any suitable arrangement of rollers 24 may be used. The rollers 24 must be able to support the load of the first displaceable element when loaded with scrap. Advantageously, the carriage is also provided with an upstanding rear wall 30. This rear wall 30, as will become apparent, is provided with a cutaway or apertured portion. A front edge of the carriage is conveniently provided with a downwardly angled lip 32. The carriage extends slightly beyond the rear of the load bed 4 and accordingly a suitable cut-out portion is provided in the door 12 to allow the carriage to extend through the door when the door is in a closed position.

The side walls 8,10 of the shell are each also conveniently provided with a plurality of vertical rollers 24, the plurality of rollers 24 extending along each side of the shell. The purpose of these rollers, as will become, clear, is to guide the first displaceable element 20 within the scrap carrier. Any suitable arrangement of the rollers may be utilised. In a further embodiment, not shown, the rollers may be disposed on the sides of the first displaceable element 20 instead of the side walls 8,10. Conveniently, the upper ends of the side walls 8,10 of the shell may be provided with inwardly directed flanges 16,18 to protect the vertical rollers 24 against damage from falling debris. Conveniently, the flanges 16,18 extend over and beyond the side walls 26,28 of the carriage.

First displacement means 40 are located to the rear of the carriage. Conveniently such first displacement means 40 are secured to the upstanding rear wall 30 of the carriage, though they could be secured to other parts of the carriage. Preferably, the first displacement means 40 may take the form of one or more winch mechanisms, though other forms of displacement means may be utilised.

A second displaceable element 60 in the form of a displaceable wall or panel is provided within the shell. The displaceable wall preferably has a surface angled forward, that is an upper edge is offset in a forward direction from a lower edge of the first displaceable wall. The displaceable wall is in a first position located to the rear of the scrap carrier 2 and may be displaced by a second displacement means 70 within the volume defined by the first displaceable element 20 without coming into contact with the first displaceable element 20. Conveniently when displaced with respect to the first displaceable element 20 the displaceable wall extends substantially within an area defined by a section of the first displaceable element 20.

Preferably, the second displaceable element 60 or displaceable wall is supported in relation to the first displaceable element 20 by a wheeled structure 62. As will become apparent, wheeled structure 62 aids relative movement between the first and second displaceable elements 20,60 while maintaining the orientation of the second displaceable element 60 with respect to the first displaceable element 20.

Conveniently, the second displacement means 70 comprises a ram or piston, such as a double acting multistage ram. A hydraulic or pneumatic arrangement is preferred. The second displaceable element 60 is as noted above located in a rest position at or toward one end of the carriage. Accordingly, it is necessary for the second displacement means 70 to extend through or around the upstanding rear wall 30 of the carriage.

Conveniently, the second displacement means 70 acts between the rear wall 6 of the shell and the second displaceable element 60. Alternatively, as shown in the illustrated embodiment, a further wall 72 is provided to the rear of the shell and the second displacement means 70 extends through the rear shell wall 6 and acts between the further wall 72 and the second displaceable element 60. Conveniently, an upper portion of the shell between the rear shell wall 6 and the first position of the second displaceable element 60 is provided with a cover (not shown) in order to avoid damage by falling debris such as scrap metal. Preferably, the cover extends behind the rear shell wall 6 to the further wall 72 to protect the first (and second displacement) means from falling debris.

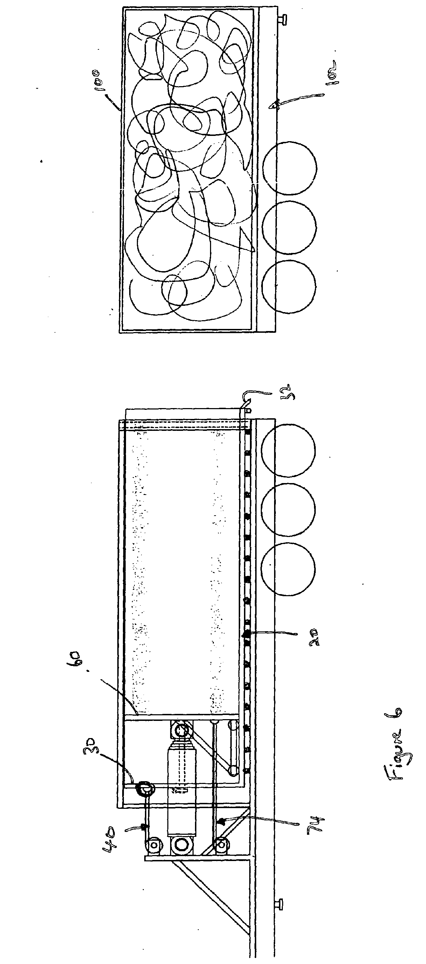

Initially, the first displacement element 20 is releasably coupled to the second displaceable element 60 by any suitable means. In the illustrated embodiment pins 66 (shown in Figure 1, located to the rear of the rear upstanding wall 30 of the first displaceable element 20 located behind the second displaceable member 60) engage in receiving apertures formed at the free ends of arms 68 (Figures 2 to 6), extending from a back surface of the second displaceable member 60 through suitable apertures or cutway portions of the rear upstanding wall 30, to couple the first displaceable element 20 and the second displaceable member 60 together. The pins 66 may be automatically removed and reinserted to releasably connect or couple the first displacement element 20 and the second displaceable element 60 together.

Operation of the apparatus will now be described. With the first and second displaceable elements 20,60 coupled together in or substantially in the position shown in Figure 2, the scrap carrier is loaded through the upper opening with scrap material by use of known means such as a teleporter. It is an advantage of the angled surfaces of the second displaceable element 60 and the door 12 that the deposited scrap will tend to form a stable heap on the first displaceable element 20. A stable heap is one in which when the door 12 is opened, the scrap does not fall or otherwise run off the heap.

When it is desired to transfer the loaded scrap, the scrap carrier is aligned with a transport container 100 located on a transport container carrier 102.

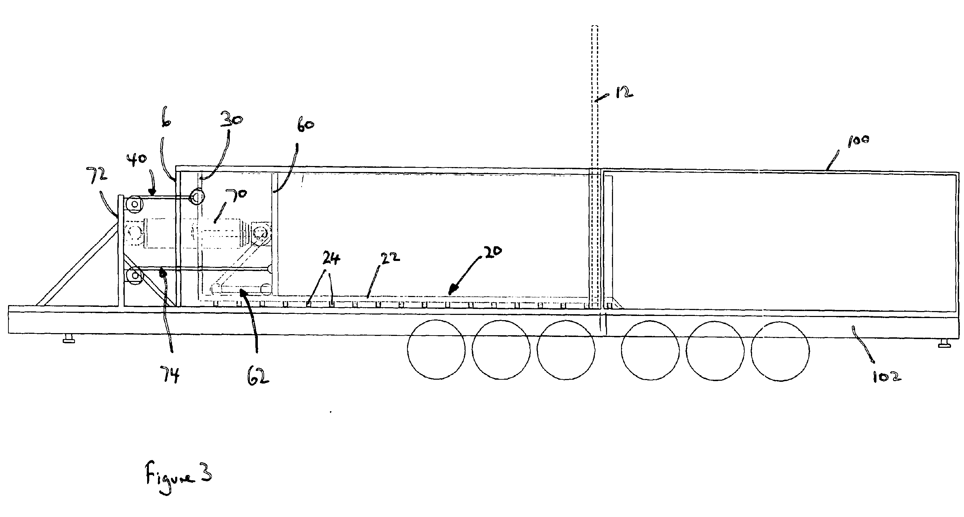

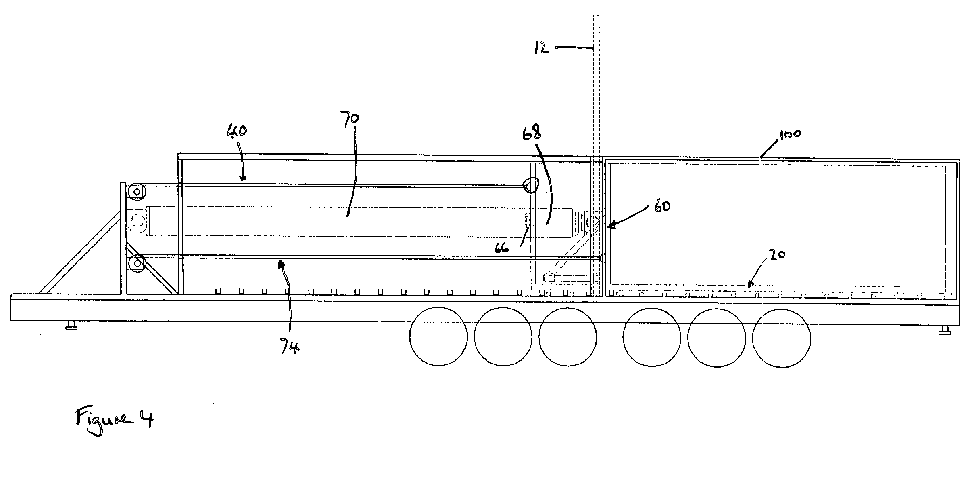

Once the scrap carrier 2 and transport container carrier 102 are aligned (Figure 3), the door 12 is raised. With the transport container carrier brakes on, the second displacement means 70 are actuated to drive the second displaceable element 60 from the rear of the shell to or slightly beyond the front of the shell. As the first and second displaceable means are coupled together, the second displacement means 70 also causes the first displaceable element 20 and the scrap loaded thereon to be moved into the transport container 100 (Figure 4).

With the second displaceable element 60 maintained in an advanced position, to hold the scrap against axial displacement, an operator then causes the first and second displaceable elements to be uncoupled, that is in the illustrated embodiment the pins 66 are caused to be withdrawn from the arms 68. This may be achieved by any suitable means. The user then operates the first displacement means 40 to withdraw the first displaceable element 20.

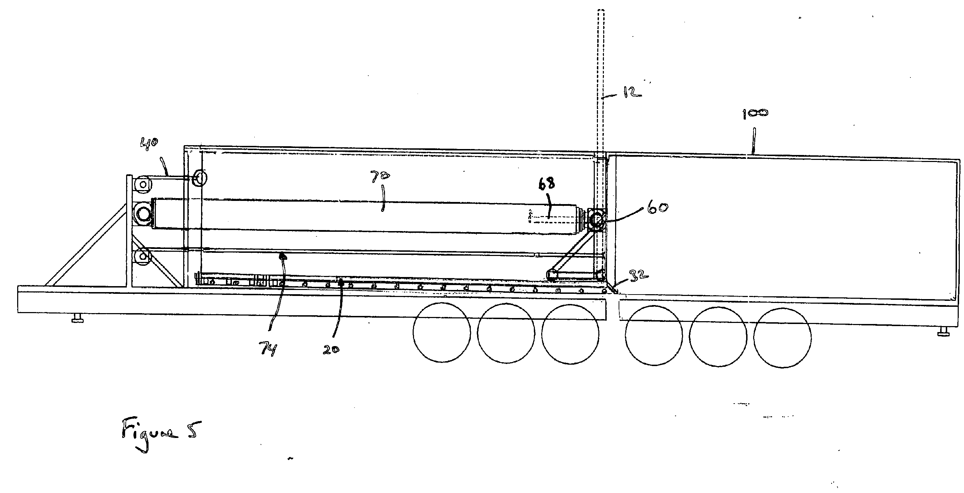

Due to the presence of the horizontal rollers 24, the first displaceable element 20 is readily pulled from beneath the scrap, thereby depositing the scrap in the transport container 100 (Figure 5). The vertical rollers 14 guide the travel of the first displacement element between the side walls 8,10. The scrap is held in position within the transport container 100 during this operation by the second displaceable element 60.

Thereafter, the second displacement means 70 is actuated to withdraw the second displaceable element 60 to its initial position.

In a preferred embodiment, as shown in the illustrated embodiment, a third displacement means 74 may be used in addition to the second displacement means 70 to withdraw the second displaceable element 60. In the illustrated embodiment, the third displacement means 74 comprises one or more winch mechanisms located between the further wall 72 and the first displaceable element 20. Once the second displaceable element 60 has returned to its first position the first displaceable element 20 and the second displaceable element 60 are coupled back together. In the illustrated embodiment, the operator causes the pins 66 to be returned to the arms 68 to couple the second displacement element 60 and the first displaceable element 20 back together. The operator controls may be such that a single instruction causes the second displacement element 60 to be withdrawn and the subsequent coupling of the first and second displaceable elements to occur.

The rear door 12 may then be returned, by any suitable means, to its closed position. Thereafter the scrap carrier 2 and the transport container carrier 102 may be separated from one another.

Each of the scrap carrier 2 and transport container carrier 102 are provided with self levelling air valves such that the levels of the scrap carrier and transport container carrier are maintained with respect to one another during transfer of the load.

It will be readily appreciated that there is a minimum of relative movement between the scrap and the transport container, such movement being due to settling of the scrap following withdrawing of the first displaceable element 20. As such damage to the transport container 100 by the scrap during loading of the scrap into the transport container is minimised.

## Claims

1. A material transfer apparatus for use in a material carrier comprises
a first displaceable element adapted to be moved between a first position and a second position,
a second displaceable element adapted to be moved between a first position and a second position and releasably coupled to the first displaceable element, a first displacement means to move the first displaceable element from the first position to the second position, the second displaceable element being releasably coupled to the first displaceable element,
means to decouple the first displaceable element from the second displaceable element
a second displacement means to move the decoupled first displaceable element from the second position to the first position, and a third displacement means to move the second displaceable element from the second position to the first position.

2. A material transfer apparatus according to claim 1, in which the second displaceable element is adapted when decoupled from the first displaceable element to move within the first displaceable element.

3. A material transfer apparatus according to claim 1 or claim 2, in which the first displaceable element comprises a base and first and second side walls, the second displaceable element being adapted to move when decoupled within an area defined between the base and first and second side walls of the first displaceable element.

4. A material transfer apparatus according to any previous claim, in which the first displaceable element is supported by rollers.

5. A material transfer apparatus according to any previous claim, in which rollers are located to the sides of the first displaceable element.

6. A material transfer apparatus according to any previous claim, in which the first displacement means comprises one or more winch mechanisms.

7. A material transfer apparatus according to any previous claim, in which the second displacement means comprises a pneumatic or hydraulic piston.

8. A material transfer apparatus according to any previous claim, in which the third displacement means acts with the first displacement means to move the first displaceable means from the second position to the first position.

9. A material transfer apparatus according to any of claims 3 to 8, in which the first displaceable means is provided with a forwardly directed lip on the base.

10. A material transfer apparatus according to any previous claim, in which the second displaceable element is provided at an angle.

11. A material transfer apparatus according to any previous claim, in which the material for transfer is scrap.

12. A material carrier incorporating a material transfer apparatus according to any previous claim, in which the material carrier is provided with a load bed on which the material transfer apparatus is located and a door adapted to be raised vertically, the rear surface of the door being provided at an angle.

13. A material carrier according to claim 12 in which the first displaceable element is adapted to extend beyond the load bed of the material carrier.

14. A method of material transfer comprising the steps of providing a material transfer apparatus according to any of claims 1 to 11, loading material onto the first displaceable element, moving the first displaceable element from the first to the second position, the second displaceable element being releasably coupled to the first displaceable element, decoupling the first displaceable element and the second displaceable element, moving the decoupled first displaceable element from the second position to the first position and then moving the second displaceable element from the second position to the first position.

15. A method of material transfer comprising the steps of providing a material carrier according to any of claims 12 to 13 and a transport container carrier provided with a transport container, loading material onto the first displaceable element, aligning the material carrier with the transport container carrier, opening the door, moving the first displaceable element from the first to the second position, the second displaceable element being releasably coupled to the first displaceable element, decoupling the first displaceable element and the second displaceable element, moving the first displaceable element from the second to the first position and moving the second displaceable element from the second to the first position.

16. A method of material transfer according to claim 15, comprising the further step of closing the door.
